# EUROPEAN PATENT APPLICATION

(11) **EP 3 213 662 A1**
(43) Date of publication of application: **06.09.2017**
(21) Application number: 16158231.7
(22) Date of filing: 02.03.2016
(51) Int. Cl.: A47J 31/44

(54) **BEVERAGE MACHINE**

(71) Applicant: Nestec S.A., 1800 Vevey (CH)
(72) Inventor: KUNZLE, Bernard, 1027 Lonay (CH)
(74) Representative: Borne, Patrice Daniel

(57) **Abstract**

Beverage machine 10 for the preparation of a beverage, wherein the beverage machine 10 comprises: a detachable support member 20, 20' comprising at least one supporting surface 21, 22, 21' onto which a container for receiving a beverage can be placed, wherein the support member 20 further comprises at least two first joint elements 24, 25, 24', 25'; at least one fixed second joint element 12 which is arranged below a beverage outlet 11 of the beverage machine 10; wherein the joint elements 12, 24, 25; 24', 25' are correspondingly configured such that each of the first joint elements 24, 25; 24', 25' can be selectively associated with the at least one first joint element 12 in such a way that the supporting surface 21, 22; 21' of the detachable support member 20; 20' is arranged horizontally; and wherein the at least two first joint elements 24, 25; 24', 25' are vertically spaced from one another such that at least two different horizontal positions of the supporting surface 21, 22; 21' can be provided when being selectively associated with the at least one second joint element 12.

## Description

### 1. Field of the invention

The present invention relates to a beverage machine, in particular to a beverage machine for the preparation of infant milk from a capsule.

### 2. Technical background

In the prior art, beverage machines for the preparation of beverages are well known. Usually such beverage machines comprise a cup carrier onto which a cup or other receptacle can be placed. The cup carrier is arranged below a beverage outlet such that the dispensed beverage can be collected by the below arranged cup. Depending on the distance of the cup carrier to the beverage outlet, it might occur that some of the dispensed beverage does not enter into the cup, but sprinkles onto the cup or the other parts of the beverage machine. In order to avoid such contamination of the cup or the beverage machine, the cup carrier has to be arranged next to the beverage outlet such that all or almost all of the dispensed beverage can be collected by the cup. However, in case it should be possible to dispense a beverage into different cups having significant different heights, the cup carrier has to be arranged at a corresponding distance from the cup carrier. In order to allow the use of different cups while avoiding such contamination issue, it was proposed in the prior art to provide the beverage machine with a movable beverage outlet, *i.e.* the beverage outlet can be adjusted to the height of the used cup.

As an alternative to such an adjustable beverage outlet, it was propose to provide a cup carrier, which can be arranged at different distances from the beverage outlet. For example, document DE 20 2012 006 928 U1 discloses a beverage machine, in particular an espresso machine, comprising a cup carrier which can be arranged at different distances from the beverage outlet. In this respect, it was proposed to provide the cup carrier with a latching element that can be selectively mounted onto different receiving elements of the beverage machine. However, such a solution only allows a relatively inaccurate positioning of the cup carrier.

Therefore, it is an object of the present invention to provide a beverage machine allowing a more accurate positioning of a container below a beverage outlet of the beverage machine. It is in particular an object of the present invention to provide a beverage machine for the preparation of infant milk allowing the use of different baby bottles having substantially different heights, wherein the openings of these different baby bottles or any other beverage receptacle can still be arranged closely below the beverage outlet.

These and other objects, which become apparent upon reading the following description, are solved by the subject-matter of the independent claim. The dependent claims refer to preferred embodiments of the invention.

### 3. Summary of the invention

According to the invention, a beverage machine for the preparation of a beverage is provided, wherein the beverage machine comprises: a detachable support member comprising at least one supporting surface onto which a container for receiving a beverage can be placed, wherein the support member further comprises at least two first joint elements (in the following also referred to as "first joint elements"); at least one fixed second joint element of the beverage machine (in the following also referred to as "second joint element") which is arranged below a beverage outlet of the beverage machine; wherein the joint elements are correspondingly configured such that each of the first joint elements can be selectively associated with the at least one first joint element in such a way that the supporting surface of the detachable support member is arranged horizontally; and wherein the at least two first joint elements are vertically spaced from one another such that at least two different horizontal positions of the supporting surface can be provided when being selectively associated with the at least one second joint element.

In the context of the present invention, the term *"horizontal"* position of the supporting surface has to be understood as a position in which the supporting surface is basically horizontally oriented below the beverage outlet of the beverage machine such that the beverage can enter into the container. The term *"different"* horizontal position refers to the distance of the supporting surface to the beverage outlet, *i.e.* different horizontal positions of the supporting surface are characterized by different distances of the supporting surface to the outlet of the beverage machine.

A *"container"* according to the present invention, is any drinking vessel, bottle, cup and the like suitable to collect a beverage from the beverage outlet, wherein in the preferred embodiment the beverage machine is a beverage machine for the preparation of infant milk and the container is a baby bottle.

A *"joint element",* preferably a *"tongue or a groove element",* can be provided by any geometric structure allowing a detachable complementarily shaped engaging arrangement of the support member at the beverage machine. In this context, it is preferred that the joint elements of the support member, e.g. groove elements, can be placed selectively in and hold by a joint element of the beverage machine , e.g. a tongue element.

In other words, the present invention proposes to provide a more flexible arrangement with respect to a horizontal positioning of the supporting surface by providing at least two spaced joint elements at/in the detachable support member such that any one of these joint elements can be associated with a joint element of the beverage machine, thereby providing a different horizontal position of the supporting surface. For example, in case one joint element is provided at the beverage machine, *i.e.* below the beverage outlet, and the support member comprises two joint elements, the supporting surface can be arranged at two different horizontal positions, *i.e.* at different vertical levels.

It is preferred that the at least two joint elements of the support member are tongue or groove elements and that the at least one joint element of the beverage machine is a correspondingly provided groove or tongue element. In this respect it is further preferred that the joint elements of the support member are groove elements and the at least one joint element of the beverage machine is a correspondingly provided tongue element.

In a first preferred alternative, the support member comprises only one supporting surface and the at least two spaced joint elements of the support member are arranged in parallel (e.g. both horizontally oriented or both inclined - *i.e.* obliquely oriented - with respect to a vertical). Thus, the two different horizontal positions are provided by the spaced groove elements having different distances from the supporting surface.

In a second preferred alternative, the support member comprises two supporting surfaces arranged on opposite horizontal sides (upper side and underside) of the support member when the respective first and second joint elements are correspondingly associated with each other. The supporting surfaces are preferably oriented perpendicular with respect to a rear lateral side where the joint elements are preferably arranged. In this context, it is further preferred that the at least two joint elements of the support member are oriented or extend in two non-parallel directions such that two different horizontal positions can be provided by simply turning over the support member, i.e. about 180°, to provide one supporting surface facing upwardly and the other supporting surface facing downwardly when one of the joint elements of the supporting member is associated with the at least one joint element of the beverage machine . More particularly, the two joint elements can be oriented in two directions which converge rearward. Thus, each of the joint elements of the support member corresponds to an *"upward"* position of one of the supporting surfaces, *i.e.* when the first joint element of the support member is associated with the joint element of the beverage machine, then the first supporting surface is upwardly oriented, i.e. facing the beverage outlet of the machine; when the second joint element of the support member is associated with the joint element of the beverage machine, then the second supporting surface is upwardly oriented, i.e. facing the beverage outlet. Also here, the two different horizontal positions are provided by arranging the joint elements of the support member at different distances with respect to the corresponding supporting surface.

Preferably, the at least one joint element of the beverage machine (e.g. a tongue element) is arranged at the beverage machine upwardly inclining from a vertical. In other words, it is preferred that the respective joint element of the support member can be moved/slid obliquely downwardly onto the joint element of the beverage machine such that the joint element of the support member is placed in/at the joint element of the beverage machine, thereby holding the support member in a horizontal position by gravity. In this respect, it is further preferred that the joint element of the beverage machine obliquely extends from a vertical with an angle between 25° and 60°, preferably between 30° and 50° and most preferably with an angle of about 40°. It is further preferred that the joint elements being tongue and groove elements have a correspondingly configured rectangular cross-section having a length between 2 cm and 6 cm, preferably between 3 cm and 5 cm and a width preferably between 0.5 cm and 1.5 cm.

Preferably, the beverage machine comprises at least two and possibly three to five joint elements, which are arranged in a (vertical) row below the beverage outlet, i.e. one above the other, wherein the joint elements of the beverage machine are arranged with such a distance from each other that each joint element of the support member can be associated with each of the joint elements of the beverage machine. Thus, in case the support member comprises two joint elements and the beverage machine comprises three to five joint elements, the support member can be arranged at respectively six, 8 or 10 different horizontal positions *(i.e.* at six, 8 or 10 different distances with respect to the beverage outlet).

It is preferred that in top view, the supporting surface(s) of the support member form(s) a planar surface preferably having a circular shape having, for instance, a radius between 4 cm and 6 cm. In this respect, it is further preferred that the supporting surface(s) have/has a planar surface area between 30 cm² and 120 cm².

Preferably, a circumferential bulge is provided at one horizontal side of and at least partially surrounding the supporting surface(s). It is further preferred that the supporting surface(s) comprise(s) a non-slip coating (e.g. provided by means of a structured surface or by means of a rubber surface). Thereby, it can be avoided that the container (*e.g.* a cup or a bottle) unintentionally slips aside during the preparation of the beverage.

The beverage machine according to the present invention is preferably a beverage machine for the preparation of infant milk or other beverages from a capsule. Especially in this field, different baby bottles having different dimensions and heights (e.g. baby bottles with different filling volumes) are often used. Moreover, often the cross-section of the opening of such baby bottles are comparatively small. Therefore, it is required that the opening of the baby bottle can be arranged more or less directly below the beverage outlet of the beverage machine in order to ensure that all of the dispensed milk enters into the baby bottle and does not sprinkle onto the outer surface of the baby bottle or onto the other parts of the beverage machine. The latter is particularly problematic, because such milk remains could cause a contamination issue, *i.e.* bacteria may grow onto the machine and in the worst case may enter into the beverage machine. As a result, by means of the present invention, a baby bottle can be arranged directly below the beverage outlet, thereby avoiding that milk may sprinkle onto the outer surface of the baby bottle or onto the other parts of the beverage machine.

### 4. Description of preferred embodiments

In the following, the invention is described exemplarily with reference to the enclosed figures, in which
- **Figure 1**: is a schematic view of a beverage machine according to a preferred first embodiment of the invention, wherein a first groove element of a detachable support member of the beverage machine is associated with a first tongue element of the beverage machine;
- **Figure 2**: is a schematic cross-sectional view showing the support member of the beverage machine shown in figure 1;
- **Figure 3**: is a schematic view of the beverage machine of figure 1, wherein a second groove element of the support member of the beverage machine is associated with the first tongue element of the beverage machine;
- **Figure 4**: is a schematic cross-sectional view showing the support member of the beverage machine shown in figure 3;
- **Figure 5**: is a schematic view of the beverage machine of figure 1, wherein the first groove element of the support member of the beverage machine is associated with a second tongue element of the beverage machine;
- **Figure 6**: is a schematic cross-sectional view showing the support member of the beverage machine shown in figure 5;
- **Figure 7**: is a schematic view of the beverage machine of figure 1, wherein the second groove element of the support member of the beverage machine is associated with the second tongue element of the beverage machine;
- **Figure 8**: is a schematic cross-sectional view showing the support member of the beverage machine shown in figure 7;
- **Figure 9**: is a schematic view of the beverage machine of figure 1, wherein the first groove element of the support member of the beverage machine is associated with a third tongue element of the beverage machine;
- **Figure 10**: is a schematic cross-sectional view showing the support member of the beverage machine shown in figure 9;
- **Figure 11**: is a schematic view of the beverage machine of figure 1, wherein the second groove element of the support member of the beverage machine is associated with the third tongue element of the beverage machine;
- **Figure 12**: is a schematic cross-sectional view showing the support member of the beverage machine shown in figure 11; and
- **Figure 13**: is a schematic cross-sectional view showing a support member of a beverage machine according to a preferred second embodiment of the invention, wherein the support member comprises only one supporting surface.

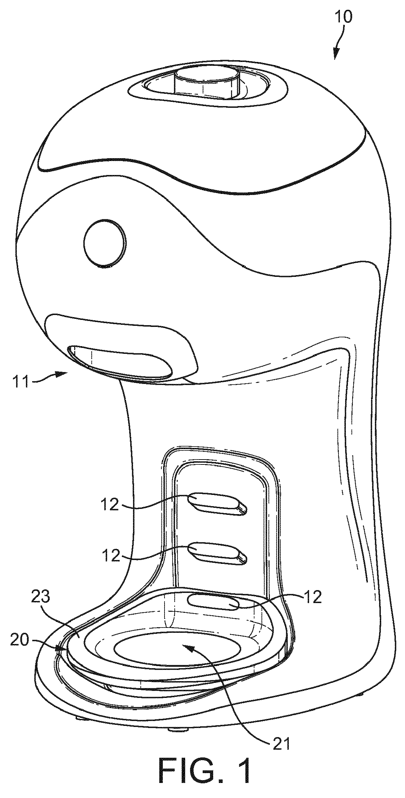

Figure 1 is a schematic view of a beverage machine 10 according to a first preferred embodiment of the invention. The beverage machine 10 of the preferred embodiment is a beverage machine 10, e.g., for the preparation of an infant milk from a capsule.

The beverage machine 10 comprises a support member 20 which is arranged below a beverage outlet 11. The beverage outlet 11 as such can comprise a capsule holder such as a drawer that is removable from the machine. The beverage outlet 11 is meant to be a region (in general) of the beverage machine 10 from which the beverage of the capsule and/or beverage machine 10 is dispensed. The support member 20 is detachably arranged at the beverage machine 10. For this purpose, the beverage machine 20 comprises (in the shown preferred embodiment) three tongue elements 12 *(i.e.* joint elements 12 of the beverage machine 10) which are arranged in a row below the beverage outlet 11.

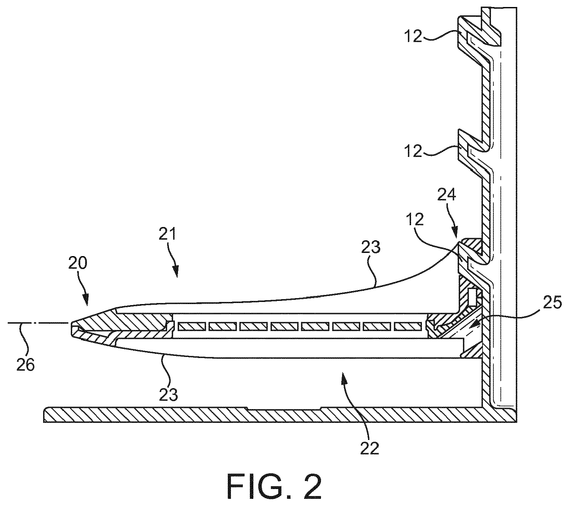

The support member 20 comprises a first supporting surface 21 and at the opposite side a second supporting surface 22 (cf. figure 2). As can be taken from figure 1, in top view, the supporting surfaces 21, 22 are circularly shaped and comprise a circumferential bulge 23 at the outer circumference of the supporting surfaces 21, 22 and preferably at least partially surrounding the supporting surfaces 21, 22. Preferably, the supporting surfaces 21, 22 have a radius between 4 and 6 cm such that different containers (*e.g.* baby bottles) can be securely placed onto the supporting surfaces 21, 22. Moreover, the supporting surfaces 21, 22 preferably comprise a non-slip coating (*e.g.* a rubber coating or a structured surface) for avoiding that a container unintentionally slips aside during the preparation of a beverage. It is further preferred that the supporting surfaces 21, 22 have a planar surface area preferably between 30 cm² and 120 cm².

As can be taken from figure 2, the support member 20 further comprises at a rear lateral side two groove elements 24, 25 *(i.e.* joint elements 24, 25 of the support member 20) which are oriented in opposite directions when viewed in transversal cross-section, *i.e.* in the shown embodiment, the first groove element 24 is obliquely upwardly oriented and the second groove element 25 is obliquely downwardly oriented. The "rear" side is here defined relative to a free "front" lateral side of the support member when the support member is connected to the machine. Each of the groove elements 24, 25 can be associated with any one of the tongue elements 12 of the beverage machine 10, thereby arranging the support member 20, *i.e.* the respective supporting surface 21, 22, at a different horizontal distance from the beverage outlet 11 of the beverage machine 10. For this purpose, the groove elements 24, 25 are not symmetrically arranged at the supporting member 20. In figure 2, the centerline of the support member 20 in cross-section is indicated by the line 26.

As can be further taken from figure 2, when a groove element 24, 25 is associated with one of the tongue elements 12, then the respective tongue element 12 is placed in one of the groove elements 24, 25, thereby holding the support member 20, wherein the wall sections of the beverage machine 10 and the support member 20 adjacent to the tongue and groove elements 12, 24, 25 *(i.e.* in the shown embodiment, the vertical wall sections above and below the tongue and groove elements 12, 24, 25) preferably act as respective contact/support surfaces. In this respect, it is further preferred that the tongue elements 12 are arranged at the beverage machine 10 to upwardly incline, i.e. obliquely protrude, such that the support member 20 is held in place by gravity and cannot unintentionally slip down. The tongue elements 12 preferably extend obliquely from a vertical with an angle between 25° and 60°, more preferably between 30° and 50° and most preferred with an angle of about 40° as shown in the figures. The tongue and groove elements 12, 24, 25 are correspondingly configured, wherein it is preferred that both have a rectangular cross-section with a length preferably between 2 cm and 6 cm, more preferred between 3 cm and 5 cm and with a width preferably between 0.5 cm and 1.5 cm.

In figures 1 and 2, the lower tongue element 12 is associated with the first groove element 24 such that the first supporting surface 21 is upwardly oriented, thereby providing an undermost horizontal position of one of the supporting surfaces 21, 22.

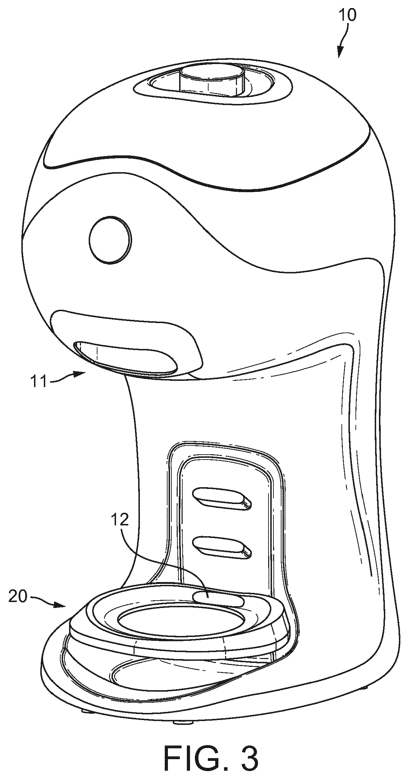

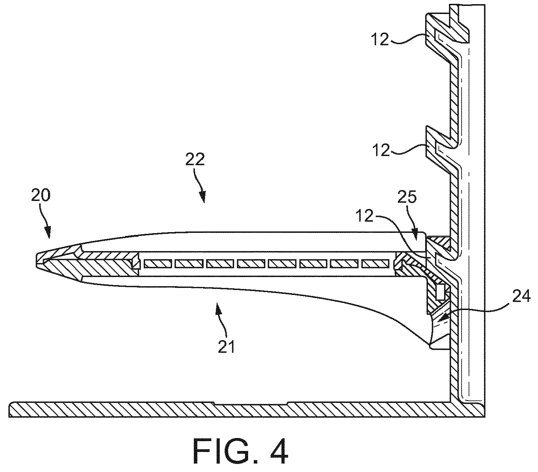

In figures 3 and 4, the support member 20 has been turned upside down, i.e. reversed, and the lower tongue element 12 has been associated with the second groove element 25 such that the second supporting surface 22 is now upwardly oriented. Thereby, a horizontal position of the second supporting surface 22 is provided which is slightly higher as the horizontal position of the first supporting surface 21 as shown in figures 1 and 2.

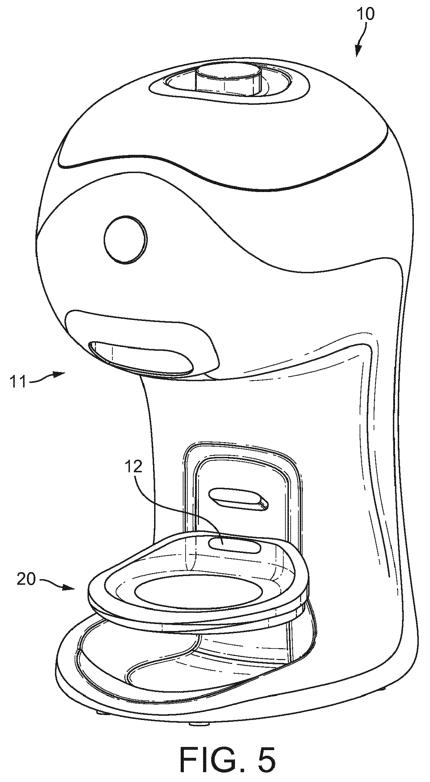

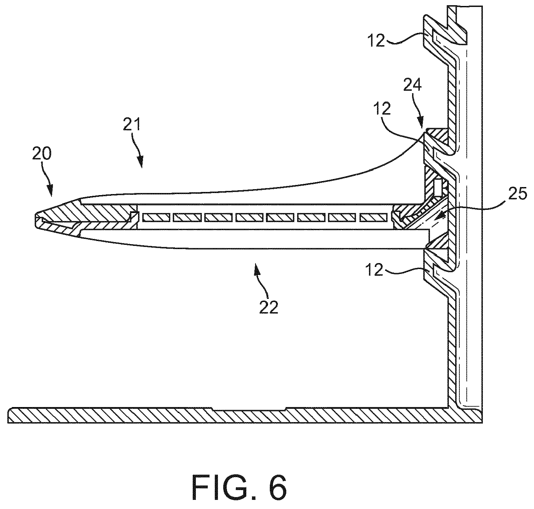

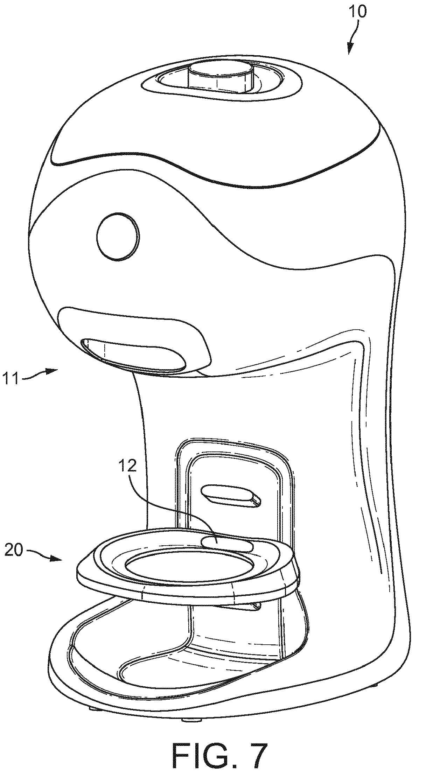

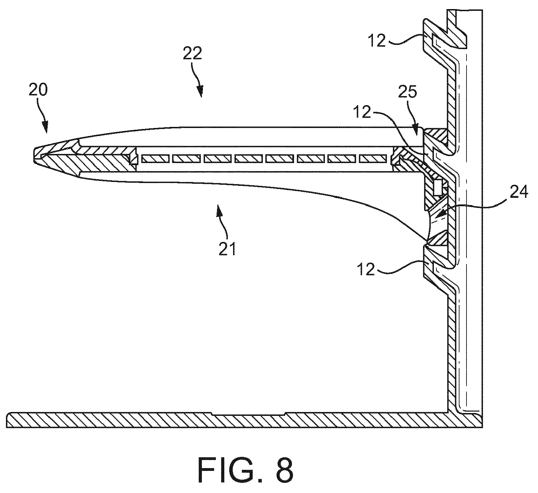

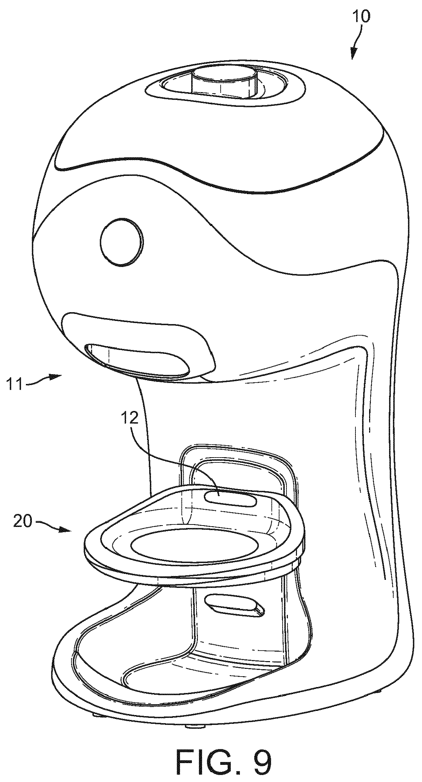

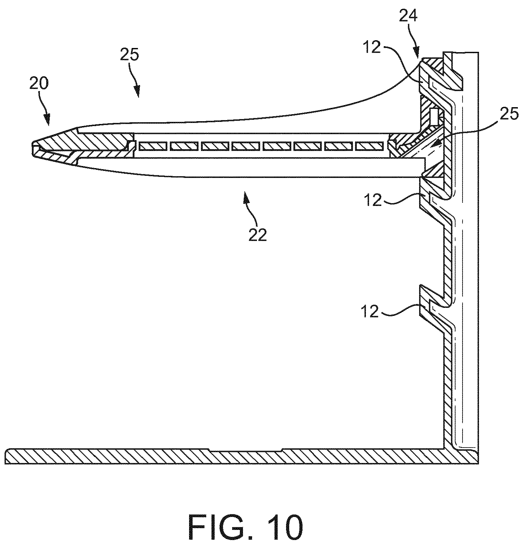

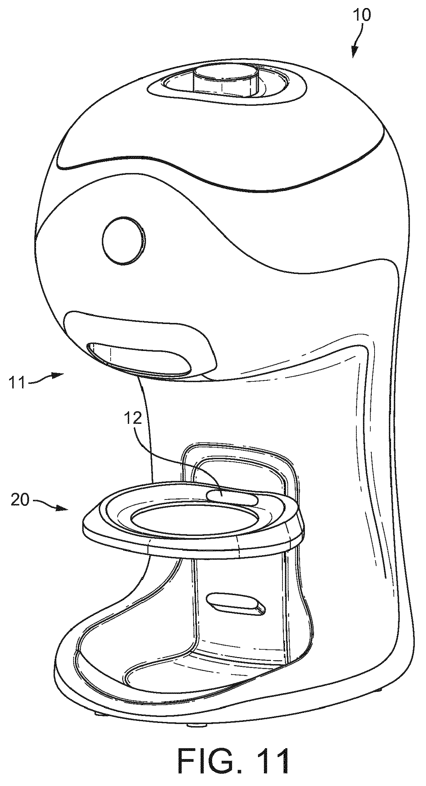

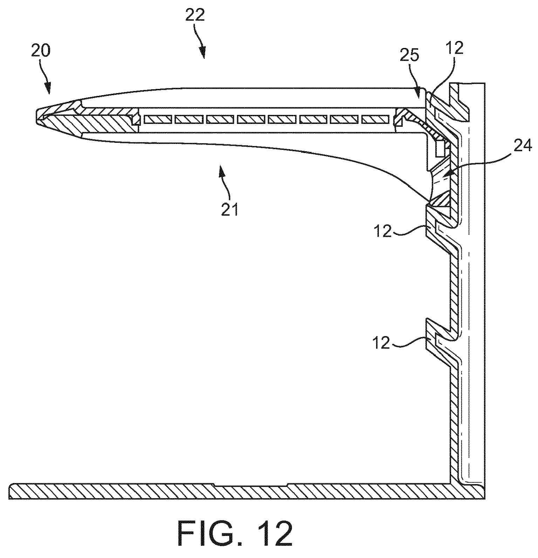

In figures 5 and 6, the middle tongue element 12 has been associated with the first groove element 24 such that the first supporting surface 21 is upwardly oriented. In figures 7 and 8, the middle tongue element 12 has been associated with the second groove element 25 such that the second supporting surface 22 is upwardly oriented. Figures 9 to 12 showing corresponding views, wherein the groove elements 24, 25 are associated with the uppermost tongue element 12.

Thus, by means of the three tongue elements 12 and the two groove elements 24, 25, it is possible to provide six different horizontal positions, *i.e.* horizontal distances of the supporting surfaces 24, 25 from the beverage outlet 11. As a result, by means of the present invention, a beverage machine 10 is provided allowing a more accurate positioning of a container, in particular of a baby bottle, below the beverage outlet 11 of the beverage machine 10. Thereby, baby bottles of different dimensions (e.g. heights) can be arranged more precisely below the beverage outlet 11 so that milk sprinkles onto the outer surface of the baby bottle or onto the other parts of the beverage machine 10 can be successfully reduced.

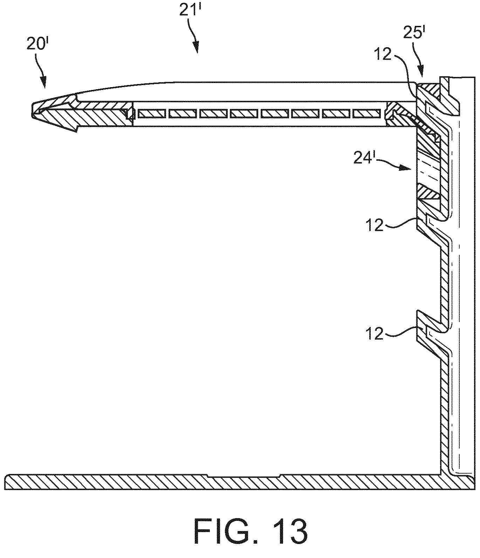

Figure 13 is a schematic cross-sectional view of a support member 20' according to a preferred second embodiment of the invention. In contrast to the support member 20 shown in figures 1 to 12, the support member 20' shown in figure 13 comprises only one supporting surface 21' and two groove elements 24', 25' which are arranged in parallel (in the shown embodiment both are obliquely oriented to be upwardly inclined with respect to a vertical).

Thus, in this embodiment, the support member 20' must not be reversed, i.e. turned over by 180° *(i.e.* turned upside down), when changing the horizontal position of the supporting surface 21'. As can be taken from figure 13, also here one of the groove elements 24', 25' can be slid obliquely downwardly onto the respective tongue element 13, thereby holding the support member 20' in a horizontal position by gravity. Since the further details correspond to the embodiment shown in figures 1 to 12, it is referred to the above explanations.

It should be clear to a skilled person that the embodiment shown in the figures is only a preferred embodiment, but that, however, also other designs of a beverage machine 10 having more or less tongue elements 12 and/or groove elements 24, 25 can be used. Moreover, the specific arrangement, orientation or structure of the tongue and groove elements 12, 24, 25 can be modified as long as a secure arrangement of the supporting member 20 at the beverage machine 10 can be provided. Moreover, the technical features and technical functions of the above-described preferred embodiments are freely combinable and do not only refer to the embodiments in which context these technical features and technical functions have been described.

## Claims

1. Beverage machine (10) for the preparation of a beverage, wherein the beverage machine (10) comprises:
- a detachable support member (20; 20') comprising at least one supporting surface (21, 22; 21') onto which a container for receiving a beverage can be placed, wherein the support member (20; 20') further comprises at least two first joint elements (24, 25; 24', 25');
- at least one second joint element (12) which is arranged below a beverage outlet (11) of the beverage machine (10);
wherein the joint elements (12, 24, 25; 24', 25') are correspondingly configured such that each of the first joint elements (24, 25; 24', 25') can be selectively associated with the at least one first joint element (12) in such a way that the supporting surface (21, 22; 21') of the detachable support member (20; 20') is arranged horizontally; and wherein the at least two first joint elements (24, 25; 24', 25') are vertically spaced from one another such that at least two different horizontal positions of the supporting surface (21, 22; 21') can be provided when being selectively associated with the at least one second joint element (12).

2. Beverage machine (10) according to claim 1, wherein the at least two first joint elements (24, 25; 24', 25') are tongue or groove elements (24, 25; 24', 25') and wherein the at least one second joint element (12) is a correspondingly provided tongue (12) or groove element, preferably the first joint elements (24, 25; 24', 25') are groove elements (24, 25; 24', 25') and the second joint element (12) is a correspondingly provided tongue element (12).

3. Beverage machine (10) according to claim 1 or 2, wherein the at least two first joint elements (24, 25; 24', 25') are arranged at a rear lateral side of the support member (20; 20').

4. Beverage machine (10) according to any one of the preceding claims, wherein the at least two first joint elements (24, 25; 24', 25') are arranged in parallel, preferably in a horizontal orientation, or obliquely extending from a vertical with an angle between 25° and 60°, preferably between 30° and 50°, and most preferably with an angle of about 40°.

5. Beverage machine (10) according to any one of the preceding claims, wherein the support member (20) comprises two supporting surfaces (21, 22) arranged on opposite horizontal sides of the support member (20) when the joint elements (12, 24, 25) are associated with each other.

6. Beverage machine (10) according to claim 5, wherein in cross-section the at least two first joint elements (24, 25) are oriented in two non-parallel directions such that two different horizontal positions can be provided by reversing the support member (20), e.g. by 180° [DEG], to present one supporting surface (21, 22) facing upwardly and the other supporting surface (22, 21) facing downwardly.

7. Beverage machine (10) according to any one of the preceding claims, wherein the second joint element (12) is arranged at the beverage machine (10) upwardly inclining from a vertical.

8. Beverage machine (10) according to any one of the preceding claims, wherein the second joint element (12) obliquely extends from a vertical with an angle between 25° and 60°, preferably between 30° and 50° and most preferably with an angle of about 40°.

9. Beverage machine (10) according to any one of the preceding claims, wherein the joint elements (12, 24, 25; 24', 25') are respectively tongue (12) and groove (24, 25; 24', 25') elements having in cross-section a rectangular shape having a length between 2 cm and 6 cm, preferably between 3 cm and 5 cm and a width between 0.5 cm and 1.5 cm.

10. Beverage machine (10) according to any one of the preceding claims, wherein the beverage machine (10) comprises at least two, preferably three to five second joint elements (12), which are arranged in a row below the beverage outlet (11).

11. Beverage machine (10) according to any one of the preceding claims, wherein in top view, the supporting surface(s) (21, 22; 21') of the support member (20; 20') form(s) a planar surface.

12. Beverage machine (10) according to claim 11, wherein the supporting surface(s) (21, 22; 21') have/has a planar surface area between 30 cm² and 120 cm².

13. Beverage machine (10) according to any one of the preceding claims, wherein a circumferential bulge (23) is provided at one horizontal side of and at least partially surrounding the supporting surface(s) (21, 22; 21').

14. Beverage machine (10) according to any one of the preceding claims, wherein the supporting surface(s) (21, 22; 21') comprise(s) a non-slip coating.

15. Beverage machine (10) according to any one of the preceding claims, wherein the beverage machine (10) is a beverage machine (10) for the preparation of infant milk from a capsule.
